# EUROPEAN PATENT SPECIFICATION

(11) **EP 2 847 460 B1**
(45) Date of publication and mention of the grant of the patent: **18.01.2017**
(21) Application number: 13726875.1
(22) Date of filing: 17.04.2013
(51) Int. Cl.: F03G 7/04

(54) **LOW ENTHALPY GEOTHERMAL SYSTEM AND METHOD FOR ITS INSTALLATION**
GEOTHERMISCHES SYSTEM MIT GERINGER ENTHALPIE UND INSTALLATIONSVERFAHREN DAFÜR
SYSTÈME GÉOTHERMIQUE À BASSE ENTHALPIE ET SON PROCÉDÉ D'INSTALLATION

(30) Priority: 24.04.2012 IT GE20120042
(43) Date of publication of application: 18.03.2015
(73) Proprietor: Alma Mater Studiorum -Università di Bologna, 40126 Bologna (IT)
(72) Inventor: TINTI, Francesco, I-40137 Bologna (IT); FOCACCIA, Sara, I-47122 Forlì (IT)
(74) Representative: Ferroni, Filippo
(86) International application number: PCT/IB2013/053034
(87) International publication number: WO 2013/160804

(56) References cited:
- WO-A1-2005/003648
- WO-A2-2007/112387
- DE-A1-102005 049 215
- US-B1- 8 020 382

## Description

The present invention relates to a low enthalpy geothermal system and a method for its installation.

As is known, in the low enthalpy geothermal energy field it is well-known the use of vertical geothermal probes for the heat absorption/dissipation from/into the earth. In fact, typically at a soil depth in the range of 60 and 260 meters the temperature remains nearly constant throughout the year, thus allowing to open interesting perspectives concerning the reduction of energy consumption of heating/cooling systems, both for domestic and industrial use, using vertical geothermal probes positioned within holes drilled in the soil.

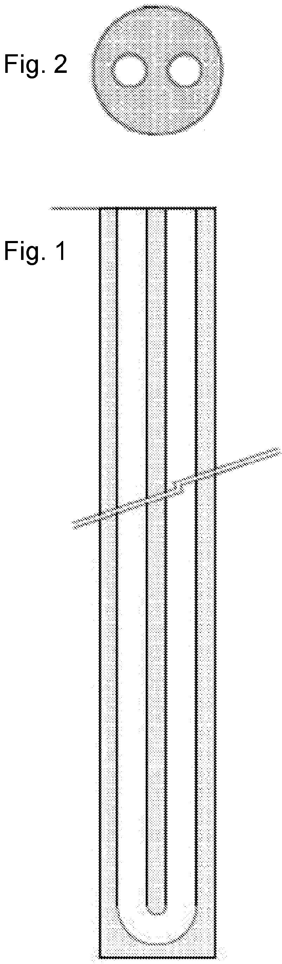

These probes are generally composed of a pair of pipes connected together by a U-shaped fitting in the portion most distant from the earth's surface (see figs. 1 and 2 herein attached), i.e. in proximity of the hole bottom.

The installation of these probes involves the placement thereof in a suitable hole, generally drilled by means of a drill, and their cementation i.e. the incorporation in a concrete casting, or their fastening through movable anchorage means.

If the probes are cemented, it becomes almost impossible to perform replacement operations thereof in case one of them will be broken, and thus should be replaced. Indeed, in case of breakage of a probe, a new perforation of the soil and the installation of a new probe must be provided, this obviously involves a considerable waste of resources.

If the probe is anchored to the soil by means of mobile anchorage means, such a problem is solved, since it is possible to replace the probe without having to drill a new hole.

Such a solution is described in the International Patent Application no. WO 2011/005168 to FREDRIK STENWRETH AB et al.

US 8 020 382 B1 is considered as the closest prior art of the subject-matter of claim 1 and discloses the features of the preamble of the claim.

The solution described in this document includes a geothermal probe immersed in a liquid fed to the hole, where said liquid is capable of improving the heat exchange between the probe and the surrounding soil.

This improvement is due to the lowering of the thermal resistance towards the soil by establishing convective motions within the liquid used, caused by the temperature difference between probe and soil. A problem of this solution is that the liquid is dispersed in the soil by not allowing, therefore, the use of substances dissolved therein (such as salts or other) to further reduce its thermal resistance. In fact, these substances could pollute the surrounding soil and groundwater eventually present, creating potential damage to activities such as agriculture and/or pastoralism and/or the pumping of drinking water for domestic and commercial uses.

The present invention proposes to solve these and other problems by providing a low enthalpy geothermal system and a method for its installation.

The basic idea of the present invention is the containment of a liquid in which convective motions occur within a suitable hollow body of elongated shape containing also a vertical geothermal probe.

Further advantageous features of the present invention are the object of the appended claims.

These features and other advantages of the present invention will become more apparent from the description of an embodiment thereof shown in the appended drawings, provided by way of non limiting example only, wherein:
Fig. 1 shows a front sectional view of a vertical geothermal probe according to the state of the art;
Fig. 2 shows a top view of the vertical geothermal probe of Fig. 1;
Fig. 3 shows a front sectional view of a geothermal system according to the invention;
Fig. 4 shows a top view of the geothermal system of Fig. 3;
Fig. 5 shows a front sectional view of a detail A regarding the end portion of the geothermal system of Fig. 3;
Figs. 6-8 show various alternative embodiments of a geothermal probe used in the geothermal system of Fig. 3.
Figs. 9-11 show alternative embodiments of a hollow body housing the geothermal probe of Figs. 3-8;
Fig. 12 shows a preparation phase of the geothermal system of Figs. 3-5;
Fig. 13 shows a phase of installation of the vertical geothermal probe of Figs. 3-5.

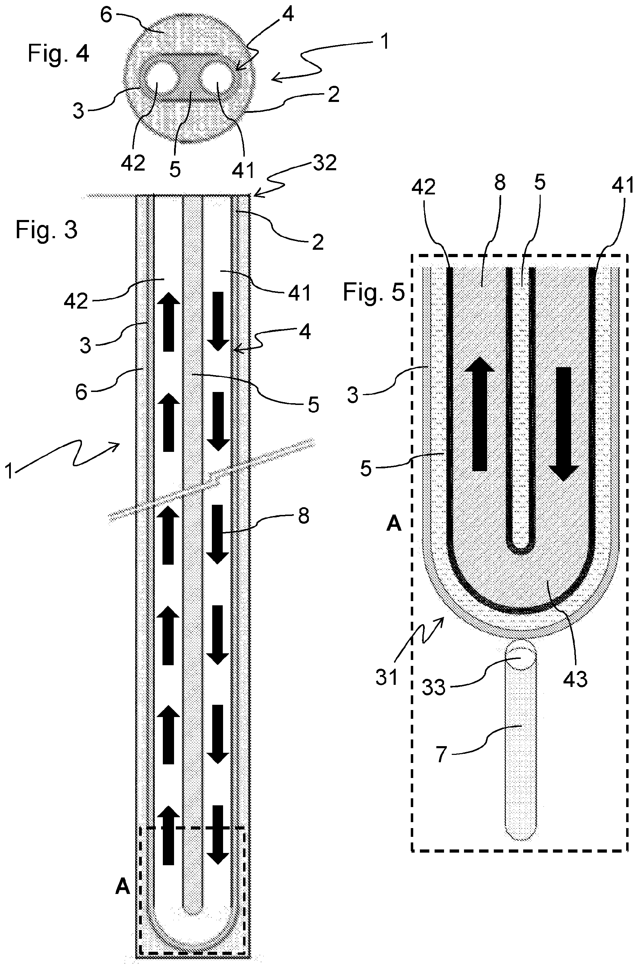

With reference to Figures 3, 4 and 5. a low enthalpy geothermal system 1 includes a hole 2, preferably of the DN 152 type, dug into the soil up to a depth preferably in the range of 60 and 260 meters. Inside this hole 2, a hollow body 3 of elongated shape is inserted; the latter is essentially a sheath designed to accommodate a vertical geothermal probe 4 immersed in a liquid 5, wherein preferably convective motions occur in order to facilitate heat exchanges.

In order to ensure both the thermal continuity between the surrounding soil and the hollow body 3 and, therefore, the liquid 5, and the mechanical stability of the entire geothermal system 1, the gap between said hollow body 3 and the hole 2 is filled with a cement mixture 6, preferably of the type containing cement and bentonite, capable of ensuring a relatively low thermal resistance.

The vertical geothermal probe 4 is implemented by means of a tube, preferably made of high density polyethylene and even more preferably of the PEAD 100 PN 16 DN 32x2.9 or 40x3.7 type, and comprises at least a feed portion 41 and a return portion 42, wherein said portions 41,42 are placed in fluid communication with each other through a fitting 43, preferably of the U-shaped type, positioned in proximity of the bottom of the hole 2.

It is evident to the person skilled in the art that a fitting of other form, like the V-shaped type or similar, can be used, without, however, departing from the teachings of the present invention.

The two portions 41,42 are arranged side by side, such that the two axes are substantially vertical and parallel to each other, preferably at a distance between centers in the range of 50 mm and 100 mm and, still more preferably, equal to 75 mm. This arrangement can be kept constant through the use of spacer elements coupled to said portions 41,42, wherein the spacer elements are well-known to the state of the art.

The fitting 43 is connected to the two portions 41,42 by welding, or through suitable hydraulic fittings.

It is however possible, for the person skilled in the art, to implement the two portions 41,42 and the fitting 43 starting from a continuous tube, e.g. by bending, without, however, departing from the teachings of the present invention.

The hollow body 3, which houses the probe 4 and the liquid 5, may be implemented by a pipe tube sealed at a terminal end 31. This pipe is preferably made of high density polyethylene and, even more preferably, said pipe is made of PEAD 100 PN 16 with DN in the range of 110 and 120 mm, with a thickness preferably in the range of 5 mm and 9 mm and, even more preferably, equal to 7 mm; this hollow body 3 also includes an open end 32 that is directed toward the surface through which the probe 4 and the liquid 5 may be introduced.

It should be noted that the lower is the thickness of the hollow body 3, the lower is the thermal resistance of the geothermal system 1 toward the soil.

The liquid 5 is mainly consisted of water, preferably deionized water, in which substances comprising salts, preferably in a quantity equal to 35 grams per liter, and/or other compounds are dissolved. This make possible to decrease the thermal resistance of the liquid 5 and/or make the liquid 5 more suitable for use of the invention, such as an antifreeze compound or other buffer solutions.

When the geothermal system 1 is in an operative condition, a pump (not shown in the attached drawings) causes the circulation of a heat transfer fluid 8, preferably water or glycol water, in the geothermal probe 4 along the direction indicated by the arrows of Figures 3 and 5, so as to exchange heat with the liquid 5, which is substantially in thermal equilibrium with the surrounding soil, in one of the two possible directions (from the probe 4 to the liquid 5, or from the liquid 5 to the probe 4).

The fact that the liquid 5 is in thermal equilibrium with the surrounding soil, means that the temperature differences generated by the passage of the heat transfer fluid 8 in the probe 4 generate convective motions (convection) within the liquid 5 that allow the probe 4 to advantageously extract/transfer a larger amount of heat from/to the soil compared to a solution in which the liquid 5 is not present.

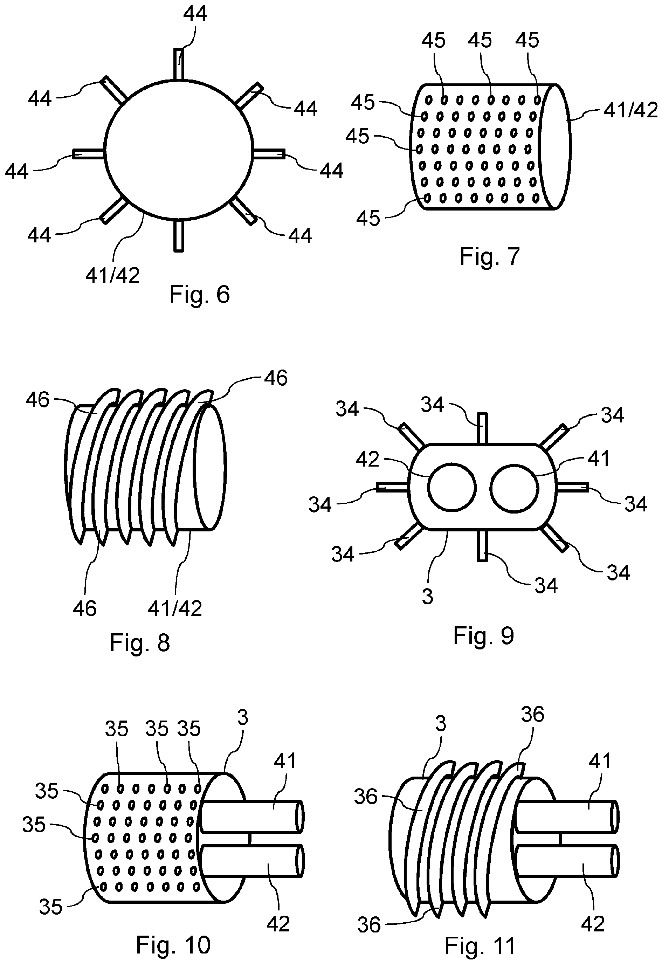

With reference to Figures 6-11, it can be noted that, to advantageously extract/transfer a greater amount of heat through the geothermal system I, the outer surfaces of the hollow body 3 and/or the probe 4 may have irregularities like fins 34,44 or scratches 35,45 or threads 36,46 with helical profile or the like, or a combination thereof, which advantageously increase the exchange surface with the surrounding soil and the liquid 5, respectively.

Furthermore, the increase of the exchange surface between the hollow body 3 and the surrounding soil advantageously increases also the contact surface of said hollow body 3 with the cement mixture 6, thus increasing the stability of the whole vertical geothermal system 1.

In order to advantageously facilitate the installation of the geothermal system 1, the terminal end 31 of the hollow body 3 comprises coupling means 33, which are positioned on said terminal end 31, and connected to a weighting element 7 having a weight preferably in the range of 25 and 100 Kg. This element 7 allows to facilitate the descent of the geothermal probe 4, especially when it must be positioned below the groundwater level, and is therefore subjected to a buoyant force which makes the installation more complicated.

Moreover, the presence of the hollow body 3 advantageously increases the protection of the geothermal probe 4 which, during the installation, may be damaged as a result of friction with the walls of the hole 2 during the descent, making it necessary to use a new probe.

Another advantage provided by the presence of the hollow body 3 concerns the possibility of increasing the number of probes 4 inside the hole 2, without interrupting the operation of the probes 4 in operating conditions and without creating additional holes 2 in the soil.

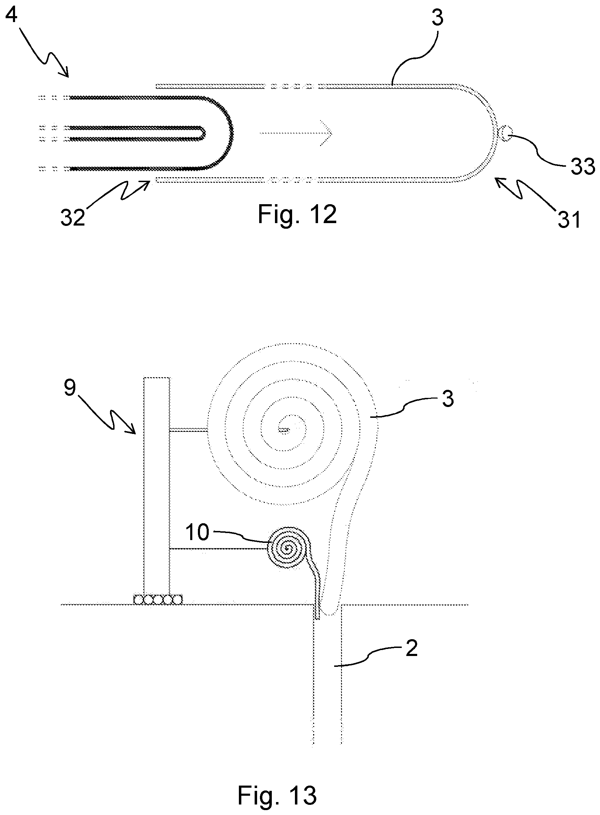

With reference to Fig. 12, a method for the installation of the geothermal system 1 comprises at least a step (a) in which the geothermal probe 4 is inserted inside the hollow body 3 before being inserted inside the hole 2, so as to advantageously reduce the time for the installation of the geothermal system 1.

Subsequently, as shown in Fig. 13, a step (b) is carried out, wherein the hollow body 3 housing the geothermal probe 4 is lowered into the hole 2 by means of an unwinder 9. During this step, a cement injection tube 10 may also be lowered into the hole 2 together with the hollow body 3. To this end, said hollow body 3 may comprise, on its external surface, support means of a well-known type (not shown in the attached drawings) that make it integral with said tube 10, so as to advantageously reduce the time for the installation of said geothermal system 1. In this way, when both the hollow body 3 and the cement injection tube 10 will have reached the desired depth, it will be possible to start to inject the cement mixture 6 through said tube 10 by means of a concrete pump (not shown in the drawings).

During the injection of the cement, it will be possible to gradually extract the tube 10 from the hole 2 by pulling it out from the supports of the hollow body 10. In this way, the removal of the injection tube 10 after completion of the injection is not needed, and the entry of air bubbles in the fluid cement mixture 6 is advantageously prevented. Moreover, the use of the tube 10 advantageously allows reducing the risk of ingress of air into the mixture 6 during injection. In fact, if the cement mixture 6 would be thrown from the top of the hole 2, a quantity of air inside of the mixture 6 would be present; this will compromise the operation of the whole geothermal system 1. Clearly, changes may be made to the example described heretofore.

In a first variant (not showed in the attached drawings), the hollow body 3 consists of a tube for drilling, preferably metallic, used to create the hole 2, wherein said tube is sealed at its proximal end, next to the bottom of said hole 2, through the injection of a modest quantity of cement.

The metallic tube for drilling would advantageously have a thermal resistance much lower than the PEAD 100 used in the previous variant.

Clearly, possible additional variations may be made to the example described heretofore without, however, departing from the scope of the present invention, which is defined by the appended claims.

## Claims

1. Low enthalpy geothermal system (1), wherein a geothermal probe (4) is adapted to be immersed in a first heat transfer medium fluid (5) located in a hole dug in the soil, **characterized in that**
it comprises a hollow body (3) of elongated shape to be positioned within said hole (2) and adapted to contain the first fluid (5), wherein the probe (4) is adapted to contain a second heat transfer medium fluid (8) separated from the first fluid (5), and wherein said probe (4) is housed within the hollow body (3), so as to ensure the thermal transfer between the probe (4) and the soil surrounding said system (1).

2. Geothermal system (1) according to claim 1, wherein the fluid (5) comprises water and substances soluble in it, such as salts or others.

3. Geothermal system (1) according to claims 1 or 2, wherein the hollow body (3) is made of high density polyethylene.

4. Geothermal system (1) according to claim 3, wherein the gap between said hollow body (3) and said hole (2) is filled with a cement mixture (6) capable of ensuring a low thermal resistance.

5. Geothermal system (1) according to claim 4, wherein the cement mixture (6) contains at least cement and bentonite.

6. Geothermal system (1) according to claims 1 or 2, wherein the hollow body (3) is made of metallic material.

7. Geothermal system (1) according to claim 6, wherein the hollow body (3) is constituted by a drilling tube used to form the hole (2), and wherein said tube is sealed at its end closest to the bottom of said hole (2).

8. Geothermal system (1) according to claim 7, wherein the drilling tube is sealed by injecting cement.

9. Geothermal system (1) according to any one of the preceding claims, wherein the vertical geothermal probe (4) comprises a feed portion (41) and a return portion (42), wherein said portions (41,42) are put in fluidic communication with each other through a fitting (43), which is positioned in proximity of the bottom of the hole (2).

10. Geothermal system (1) according to any one of the preceding claims, wherein the outer surface of the vertical geothermal probe (4) has irregularities like ribs, fins (44) or scratches (45) or threads (46) having a helical profile or the like, or combination thereof that increase the exchange surface with the fluid (5).

11. Geothermal system (1) according to any one of the preceding claims, wherein the outer surface of the hollow body (3) has irregularities like ribs, fins (34) or scratches (35) or threads (36) having a helical profile or the like, or combination thereof that advantageously increase the exchange surface with the surrounding soil.

12. Geothermal system (1) according to anyone of the preceding claims, wherein the vertical geothermal probe (4) is made of high density polyethylene.

13. Method for the installation of a geothermal system (1) according to any one of claims 1 to 12, comprising at least a step (b) wherein a geothermal probe (4) adapted to contain a second heat transfer medium fluid (8) is lowered into a hole (2), **characterized in that**
before said step (b) a first step is carried out (a) wherein the geothermal probe (4) is inserted within a hollow body (3) having an elongated shape and adapted to contain a first heat transfer medium fluid (5) separated from the second fluid (8).

14. Method according to claim 13, wherein, during the step (b), a cement injection tube (10) is also lowered into the hole (2) together with the hollow body (3).

## Patentansprüche

1. Niederenthalpisches geothermales System (1), bei dem eine geothermale Sonde (4) ausgebildet ist, in ein erstes Wärmeübertragungsmedium-Fluid (5) eingetaucht zu werden, das in einem in den Boden gebohrten Loch angeordnet ist,
**dadurch gekennzeichnet, dass**
es einen innerhalb des Loches (2) zu positionierenden und zur Aufnahme des ersten Fluids (5) ausgebildeten hohlen Körper (3) länglicher Form aufweist, wobei die Sonde (4) ausgebildet ist, ein zweites Wärmeübertragungsmedium-Fluid (8) getrennt von dem ersten Fluid (5) aufzunehmen, und wobei die Sonde (4) innerhalb des hohlen Körpers (3) angeordnet ist, um die thermische Übertragung zwischen der Sonde (4) und dem das System (1) umgebenden Boden sicherzustellen.

2. Geothermales System (1) gemäß Anspruch 1, bei dem das Fluid (5) Wasser und darin lösbare Substanzen aufweist, wie etwa Salze oder andere.

3. Geothermales System (1) gemäß Anspruch 1 oder 2, bei dem der hohle Körper (3) aus einem Polyethylen hoher Dichte gemacht ist.

4. Geothermales System (1) gemäß Anspruch 3, bei dem die Lücke zwischen dem hohlen Körper (3) und dem Loch (2) mit einer Zementmischung (6) gefüllt ist, die geeignet ist, einen geringen thermischen Widerstand sicherzustellen.

5. Geothermales System (1) gemäß Anspruch 4, bei dem die Zementmischung (6) mindestens Zement und Bentonit enthält.

6. Geothermales System (1) gemäß Anspruch 1 oder 2, bei dem der hohle Körper (3) aus metallischem Material gemacht ist.

7. Geothermales System (1) gemäß Anspruch 6, bei dem der hohle Körper (3) von einem zum Formen des Loches (2) genutzten Bohrungsrohr gebildet ist, und wobei das Rohr an seinem am nächsten zum Grund des Loches (2) befindlichen Ende versiegelt ist.

8. Geothermales System (1) gemäß Anspruch 7, bei dem das Bohrungsrohr durch Injizieren von Zement versiegelt ist.

9. Geothermales System (1) gemäß einem der vorherigen Ansprüche, bei dem die vertikale geothermale Sonde (4) einen Zuführungsabschnitt (41) und einen Rückholabschnitt (42) aufweist, wobei diese Abschnitte (41, 42) durch einen Anschluss (43) in fluidische Kommunikation miteinander gebracht sind, der in Nähe zum Grund des Loches (2) positioniert ist.

10. Geothermales System (1) gemäß einem der vorherigen Ansprüche, bei dem die äußere Oberfläche der vertikalen geothermalen Sonde (4) Irregularitäten wie Rippen, Grate (44) oder Ritzen (45) oder Gewinde (46) mit einem spiralförmigen Profil oder dergleichen, oder eine Kombination daraus aufweist, die die Austauschoberfläche mit dem Fluid (5) vergrößern.

11. Geothermales System (1) gemäß einem der vorherigen Ansprüche, bei dem die äußere Oberfläche des hohlen Körpers (3) Irregularitäten wie Rippen, Grate (34) oder Ritzen (35) oder Gewinde (36) mit einem spiralförmigen Profil oder dergleichen, oder eine Kombination daraus aufweist, die vorteilhaft die Austauschoberfläche mit dem umgebenden Boden vergrößern.

12. Geothermales System (1) gemäß einem der vorherigen Ansprüche, bei dem die vertikale geothermale Sonde (4) aus Polyethylen hoher Dichte gemacht ist.

13. Verfahren zum Installieren eines geothermalen Systems (1) gemäß einem der Ansprüche 1 bis 12, aufweisend mindestens einen Schritt (b), in dem eine geothermale Sonde (4), die dazu ausgebildet ist, ein zweites Wärmeübertragungsmedium-Fluid (8) zu enthalten, in ein Loch (2) abgesenkt wird,
**dadurch gekennzeichnet, dass**
vor dem Schritt (b) ein erster Schritt ausgeführt wird (a), in dem die geothermale Sonde (4) in einen hohlen Körper (3) eingesetzt wird, der eine längliche Form hat und zum Aufehmen eines ersten Wärmeübertragungsmedium-Fluids (5) getrennt vom zweiten Fluid (8) ausgebildet ist.

14. Verfahren gemäß Anspruch 13, bei dem während des Schrittes (b) auch ein Zementinjektionssrohr (10) zusammen mit dem hohlen Körper (3) in das Loch (2) abgesenkt wird.

## Revendications

1. Système géothermique de basse enthalpie (1), dans lequel une sonde géothermique (4) est adaptée pour être immergée dans un premier fluide caloporteur (5) situé dans un trou creusé dans le sol,
**caractérisé en ce que**
il comprend un corps creux (3) de forme allongée à positionner au sein dudit trou (2) et adapté pour contenir le premier fluide (5), dans lequel la sonde (4) est adaptée pour contenir un second fluide caloporteur (8) séparé du premier fluide (5), et dans lequel ladite sonde (4) est logée au sein du corps creux (3), de façon à assurer le transfert thermique entre la sonde (4) et le sol environnant ledit système (1).

2. Système géothermique (1) selon la revendication 1, dans lequel le fluide (5) comprend de l'eau et des substances qui y sont solubles, telles que des sels ou autres.

3. Système géothermique (1) selon les revendications 1 ou 2, dans lequel le corps creux (3) est constitué de polyéthylène haute densité.

4. Système géothermique (1) selon la revendication 3, dans lequel l'espace entre ledit corps creux (3) et ledit trou (2) est rempli d'un mélange de ciment (6) capable d'assurer une faible résistance thermique.

5. Système géothermique (1) selon la revendication 4, dans lequel le mélange de ciment (6) contient au moins du ciment et de la bentonite.

6. Système géothermique (1) selon la revendication 1 ou 2, dans lequel le corps creux (3) est constitué d'un matériau métallique.

7. Système géothermique (1) selon la revendication 6, dans lequel le corps creux (3) est constitué par un tube de forage utilisé pour former le trou (2), et dans lequel ledit tube est obturé à son extrémité la plus proche du fond dudit trou (2).

8. Système géothermique (1) selon la revendication 7, dans lequel le tube de forage est obturé en injectant du ciment.

9. Système géothermique (1) selon l'une quelconque des revendications précédentes, dans lequel la sonde géothermique verticale (4) comprend une portion d'alimentation (41) et une portion de retour (42), lesdites portions (41, 42) étant placées en communication fluidique l'une avec l'autre par l'intermédiaire d'un raccord (43), qui est positionné à proximité du fond du trou (2).

10. Système géothermique (1) selon l'une quelconque des revendications précédentes, dans lequel la surface externe de la sonde géothermique verticale (4) comporte des irrégularités comme des nervures, des ailettes (44) ou des entailles (45) ou des filets (46) ayant un profil hélicoïdal ou similaire, ou l'une de leurs combinaisons qui augmentent la surface d'échange avec le fluide (5).

11. Système géothermique (1) selon l'une quelconque des revendications précédentes, dans lequel la surface externe du corps creux (3) comporte des irrégularités comme des nervures, des ailettes (34) ou des entailles (35) ou des filets (36) ayant un profil hélicoïdal ou similaire, ou l'une de leurs combinaisons qui augmentent avantageusement la surface d'échange avec le sol environnant.

12. Système géothermique (1) selon l'une quelconque des revendications précédentes, dans lequel la sonde géothermique verticale (4) est constituée de polyéthylène haute densité.

13. Procédé d'installation d'un système géothermique (1) selon l'une quelconque des revendications 1 à 12, comprenant au moins une étape (b) dans laquelle une sonde géothermique (4) adaptée pour contenir un second fluide caloporteur (8) est abaissée dans un trou (2),
**caractérisé en ce que**
avant ladite étape (b), une première étape est effectuée (a) dans laquelle la sonde géothermique (4) est insérée au sein d'un corps creux (3) ayant une forme allongée et adapté pour contenir un premier fluide caloporteur (5) séparé du second fluide (8).

14. Procédé selon la revendication 13, dans lequel, pendant l'étape (b), un tube d'injection de ciment (10) est aussi abaissé dans le trou (2) conjointement avec le corps creux (3).
